Europäisches Patentamt

European Patent Office

Office européen des brevets

(11) Publication number: **0 493 045 B1**

# EUROPEAN PATENT SPECIFICATION

(45) Date of publication of patent specification: **14.06.95**   (51) Int. Cl.6: **A23L 1/015**, A23L 1/32, A23C 15/14, A23L 1/314

(21) Application number: **91311909.5**

(22) Date of filing: **20.12.91**

(54) **Method of reducing cholesterol concentration in food.**

(30) Priority: **21.12.90 JP 405028/90**

(43) Date of publication of application:
**01.07.92 Bulletin 92/27**

(45) Publication of the grant of the patent:
**14.06.95 Bulletin 95/24**

(84) Designated Contracting States:
**AT BE CH DE DK ES FR GB GR IT LI LU NL SE**

(56) References cited:

**LEBENSMITTEL-WISSENSCHAFT UND TECH-NOLOGIE vol. 21, no. 6, 1988, pages 342 -345; H. AIHARA ET AL.: '"Degradation of Choles-terol in Hen's Egg Yolk and itsLow Density Lipoprotein by Extracellular Enzymes of Rhodococcus equi No. 23"'**

(73) Proprietor: **KYOWA HAKKO KOGYO CO., LTD.**
**6-1, Ohte-Machi Itchome**
**Chiyoda-ku,**
**Tokyo (JP)**

(72) Inventor: **Saito, Chiaki**
**3-9-10, Naka-machi**
**Machida-shi,**
**Tokyo (JP)**
Inventor: **Ohuchi, Kozo**
**2-2-9, Sakuradai**
**Hasuda-shi,**
**Saitama-ken (JP)**

(74) Representative: **Lambert, Hugh Richmond et al**
**D. YOUNG & CO.,**
**21 New Fetter Lane**
**London EC4A 1DA (GB)**

**Description**

The present invention relates to a method of reducing cholesterol concentration in eggs and egg-containing foodstuffs.

Cholesterol is contained in large amounts in food such as eggs, meat, fish meat, dairy products, etc. It is known that an excessive intake of cholesterol from these foodstuffs results in increasing serum cholesterol concentration, which causes coronary arterial heart disease [Dairy Council Digest, 60 (2), (1989)-]. Accordingly, a need for cholesterol-reduced foodstuffs has been increasing in recent years, not only as diet for patients with hypercholesterolemia, but also as daily food.

It is known that cholesterol-reduced food may be obtained by both physical and chemical methods. For example, cholesterol can be extracted from food with hexane or acetone (Japanese Published Examined Patent Application No. 42944/71 and Japanese Published Unexamined Patent Application No. 19062/72) or by supercritical carbon dioxide extraction (Japanese Published Unexamined Patent Application Nos. 135847/84 and 167035/90).

It is also known that cholesterol-reduced butter may be obtained by adsorbing cholesterol using polymer-supported digitonin having a high affinity for cholesterol [J. Agric. Food. Chem., 38 (9), 1839, (1990)].

It is also known that cholesterol-reduced egg and milk products may be obtained by contacting egg yolks in solution, or milk products, with $\beta$-cyclodextrin having a high affinity for cholesterol, and then separating insoluble cholesterol-$\beta$-cyclodextrin complex by centrifugation (Japanese Published Unexamined Patent Application Nos. 252259/89, 98553/91 and 49647/91).

Biochemical methods are also known for degrading cholesterol in food with microorganisms [Japanese Published Unexamined Patent Application No. 267231/88, J. of Food Science, 53 (2), 659 (1989)] and also for converting cholesterol to coprostanol, a non-absorbable sterol, with cholesterol reductase ([FASEB Journal, 2, (4), 1660 (1988) and US-A-4921710].

In the physical and chemical methods described above, there is a problem that fats, proteins, pigments and flavour components are also extracted and cause deterioration in the quality of the foodstuff.

The biochemical enzymatic methods are better in causing no deterioration in the quality of the foodstuff, but since food cholesterol exists in lipoprotein, biomembrane, or fatty granules [Biochim. Biophys. Acta, 164, 566 (1968)], such biochemical methods tend to be ineffective.

It has also been reported that in the case of using water-soluble enzymes, the enzymes hardly act on cholesterol in fats, so that often it is necessary to combine a supercritical fluid method with the enzymatic conversion of the cholesterol [Spectrum Food Industry, 6 (2), 21 (1989)].

It has further been reported that in the degradation of cholesterol in egg yolk by extracellular enzymes of Rhodococcus equi No. 23, the simultaneous action of phospholipase C accelerates the reaction [Lebensmittel-Wissenshaft und-Technologie, 21 (6), 342 (1988)]. However, it is not possible to degrade cholesterol completely in egg yolks by that method, and the treated egg yolk has poor functional properties.

Improved methods for reducing the cholesterol content of foodstuffs, particularly eggs and egg-containing foodstuffs are thus in demand.

According to the present invention, an improved method is provided for reducing the cholesterol concentration of foodstuffs consisting of or containing eggs, and which comprises enzymatically hydrolysing phospholipids in the foodstuff either prior to or simultaneously with the treatment of the foodstuff to reduce cholesterol content, that hydrolysis being carried out using phospholipase D.

The enzymatic hydrolysis of the phospholipid content of the foodstuff using phospholipase D, rather than phospholipase C prior to or simultaneously with the treatment of the foodstuff to reduce the cholesterol content is found to increase the rate of cholesterol removal, leading to shorter processing times and to more effective removal of the cholesterol, leading to low levels of cholesterol in the final foodstuff.

The term "foodstuff" as used herein means eggs or processed egg-containing foodstuffs.

Hydrolysis of the phospholipids refers to hydrolysis of the ester bond of the phospholipid.

In accordance with this invention the enzyme used in the hydrolysis of the phospholipids in the foodstuff, prior to or simultaneously with the cholesterol reducing treatment is phospholipase D (EC 3.1.4.4). The enzyme may be used as such or as an animal or plant tissue or a microbial cell capable of producing the enzyme, including cultures thereof.

Phospholipase D used in accordance with the invention hydrolyses phospholipids into phosphatidic acid and abase (choline or ethanolamine) and may be obtained from microorganisms or plants [Protein, Nucleic Acid, Enzyme, 31 (6), 553 (1986), Japanese Published Unexamined Patent Application Nos. 99386/73, 44049/79, 63388/83, 152481/83, 219373/88 and 222679/90]. Commercially available sources are Phospholipase D (P8023) (derived from the genus Streptomyces, manufactured by Sigma Inc.),

Phospholipase D (P4912) (derived from the genus Streptomyces, manufactured by Sigma Inc.), and Phospholipase D (P7758) (derived from cabbage, manufactured by Sigma Inc.).

In the method of the invention, the phospholipase D may be added to or mixed with the foodstuff as it is, or as an aqueous solution. Alternatively, the enzyme may be immobilized onto a carrier and the foodstuff brought into contact with the carrier. To perform the hydrolysis the treatment is carried out at a temperature of 2 to 70°C, preferably 5 to 50°C, for 10 seconds to 100 hours, preferably 60 seconds to 50 hours. Amounts of hydrolytic enzyme used may range from $1 \times 10^{-1}$ to $1 \times 10^5$, preferably 1 to $1 \times 10^4$ units per gram of phospholipids in the foodstuff.

During the enzyme treatment, the pH of the foodstuff may be adjusted to that required in the processed foodstuff, or the pH may be kept at its original value.

As indicated, the method of the invention, i.e. enzymatic hydrolysis of the phospholipids contained in the foodstuff, is carried out in conjunction with the treatment of the foodstuff to reduce its cholesterol content. For that purpose any of the known treatments for reducing the cholesterol of foodstuffs can be used including those which are currently being developed. Examples of such treatments include: treatment with enzyme systems which oxidize, reduce or degrade the cholesterol (e.g. cholesterol oxidase, cholesterol reductase); and treatment with microorganisms which catalyses the same reaction (e.g. microorganisms of the genus Eubacterium, Nocardia and Lactobacillus). Also included are physical and chemical methods of extraction of the cholesterol with an organic solvent such as acetone or hexane, etc. or with supercritical carbon dioxide and so on. Alternatively the cholesterol content may be reduced by adsorption techniques using β-cyclodextrin, digitonin immobilized on a carrier, or activated carbon as the adsorbent.

The enzymatic hydrolysis of the phospholipids may be carried out either during or before the cholesterol removal treatment. In those cases where the cholesterol removal treatment inhibits the hydrolysis of the phospholipids, then of course the hydrolysis should be carried out first.

The method of the invention is illustrated by the following examples.

In the following examples cholesterol oxidase activity is determined by the method of Uwajima et al. [Agricultural and Biological Chemistry, 42 (7), 1453 (1978)].

Phospholipase D activity is determined by first mixing 0.5 ml of 50 mM tris hydrochloride buffer (pH 7.0) with 0.5 ml of a 6% purified soya lecithin emulsion (0.6 g of purified soya lecithin, 10 ml of distilled water) following which 0.01 ml of the enzyme solution is added to the mixture. After reacting at 37°C for 10 minutes, 0.5 ml of 15% aqueous trichloroacetic acid solution is added to terminate the reaction. The choline content of the reaction solution is then measured using a "Determiner ChE" apparatus (manufactured by Kyowa Medex Co.). As a control the same procedure is repeated using a reaction solution sample which has been heated to inactivate the enzyme. One unit of enzyme activity is defined as that which releases 1 μmol/min of choline in the sample.

The activity of phospholipase C is determined according to the method of Taguchi et al. [Biochimica et Biophysica Acta, 409, 75 (1975)].

The decrease in cholesterol in the treated products is determined as follows. First, the treated product is freeze-dried and then ground into powder. The lipid fraction is extracted from the powder with a mixture of chloroform and methanol (2:1). The cholesterol (CHOL) and 4-cholestenone (4-ONO) of the extracted lipid fraction is then measured by gas chromatography using a Gasukuro Kogyo, OV-17, column at a temperature of 270°C.

From those results the relative content of 4-cholestenone (4-ONO) in the treated product is determined as a percentage of total 4-cholestenone + cholesterol (CHOL) by the formula

$$\text{mol\% (4-ONO)} = \frac{4\text{-ONO}}{4\text{-ONO} + \text{CHOL}} \times 100 ;$$

the increase in mol% of 4-ONO in the final product, of course, indicating a corresponding decrease in CHOL content.

Example 1

Cholesterol oxidase and either phospholipase D or phospholipase C having the activity units shown in Table 1 were added to 50 g of egg yolk. The treated egg yolk was then heated at 37°C for 3 hours. A sample to which no enzyme was added was used as a control.

Table 1

| Treated Group | Amount of Enzyme Added (unit/g Egg Yolk) | | |
|---|---|---|---|
| | CHOD | PL-C | PL-D |
| 1 (Control) | - | - | - |
| 2 | 400 | - | - |
| 3 | 400 | - | 4 |
| 4 | 400 | - | 80 |
| 5 | 40 | - | - |
| 6 | 200 | - | - |
| 7 | 800 | - | - |
| 8 | 40 | - | 40 |
| 9 | 200 | - | 40 |
| 10 | 800 | - | 40 |
| Comparison Group | 400 | 8 | - |
| | 400 | 160 | - |

Following the heat treatment at 37°C for 3 hours, the treated egg yolk was freeze-dried and the lipid fraction extracted with ethyl acetate followed by fractionation. The relative 4-ONO concentration was then determined by the method described above. The results are shown in Table 2.

Table 2

| Treated Group | Relative 4-ONO Concentration (Mol%) |
|---|---|
| 1 (Control) | 0.0 |
| 2 | 34.0 |
| 3 | 77.7 |
| 4 | 96.1 |
| 5 | 10.5 |
| 6 | 26.3 |
| 7 | 48.5 |
| 8 | 83.4 |
| 9 | 97.0 |
| 10 | 99.1 |
| Comparison Group (PL-C) | 50.3 |
| | 58.8 |

The results given in Table 2 show the clear benefit of using PL-D in combination with CHOD in reducing the cholesterol content of egg yolks in comparison with the two controls using PL-C in combination with CHOD.

Example 2

Phospholipase D having the activity units shown in Table 3 was added to 50 g of egg yolk.

Table 3

| Treated Group | Amount of PL-D Added (unit/g Egg Yolk) |
|---|---|
| 1 (Control) | - |
| 2 | 0.06 |
| 3 | 0.6 |
| 4 | 6 |
| 5 | 30 |

The mixture was treated at 37°C for 3 hours to give a treated egg yolk. A sample to which no enzyme was added was used as a control group. The treated egg yolk was freeze-dried to give a powdery sample. To 10 g each of the powdery sample was added 100 ml of cold acetone (5°C). After stirring for a minute, the sample was centrifuged to give cholesterol-extracted dry egg yolk powders. The extraction efficiency and selectivity of cholesterol were determined by the cholesterol content and triglyceride content in acetone used for the extraction. The cholesterol content was measured by gas chromatography, and triglyceride content was measured by TLC/FID IATROSCAN (manufactured by Diatron Co.).

The amount of cholesterol extracted from each sample is then expressed as a percentage of the cholesterol extracted from the control sample. The amount of triglyceride extracted is expressed in a similar manner. The results are shown in Table 4.

Table 4

| Treated Group | Cholesterol Extracted (%) | Triglyceride Extracted (%) |
|---|---|---|
| 1 (Control) | 100 | 100 |
| 2 | 110 | 92 |
| 3 | 112 | 96 |
| 4 | 114 | 88 |
| 5 | 121 | 97 |

The figures given in Table 4 clearly indicate the increased extraction of cholesterol from egg yolks using an initial PL-D treatment of the egg yolks followed by extraction with acetone.

Example 3

A 20% aqueous solution of egg yolks was centrifuged at 10000 x g for 15 minutes to obtain the supernatant. To 25 ml of the supernatant was added 30 units of phospholipase D. The mixture was treated at 37°C for 3 hours to give a treated egg yolk product. A sample to which no enzyme was added was used as a control.

The treated egg yolk product was then passed through a column packed with a polymer-immobilized digitonin which was prepared by the method of Reference Example 1 (bed volume: 30 ml). 40 ml of water were then passed through the column to recover the treated egg yolk as an aqueous solution. The aqueous egg yolk solution thus obtained was then freeze-dried to give powdery samples. An extraction solvent (chloroform : methanol : acetic acid = 2:1:0.1) was then added to each powdered sample. After stirring for 30 minutes, the mixture was centrifuged to recover a lipid fraction extract as the supernatant.

The amounts of cholesterol and triglyceride adsorbed from the treated egg yolk were determined by analyzing the lipid fraction extract by the method described in Example 2. The results are shown in Table 5.

Table 5

| Treated Group | Cholesterol Adsorbed (%) | Triglyceride Adsorbed (%) |
|---|---|---|
| Control Group | 30 | 28 |
| PL-D-Treated Group | 33 | 14 |

The results clearly indicate the improved adsorption of cholesterol from egg yolks obtainable by pretreatment of the egg yolks with PL-D prior to adsorption of the cholesterol onto immobilised digitonin.

Example 4

Cholesterol oxidase and either phospholipase D or phospholipase C having the activity units shown in Table 6 were added to and mixed with 100 g of egg yolk.

Table 6

| Treated Group | Amount of Enzyme Added (unit/g Egg Yolk) | | |
|---|---|---|---|
| | CHOD | PL-C | PL-D |
| 1 (Control) | - | - | - |
| 2 | 200 | - | - |
| 3 | 200 | - | 2 |
| 4 | 200 | - | 40 |
| Comparison Group (PL-C) | 200 | 4 | - |
| | 200 | 80 | - |

The mixture was treated at 37°C for 3 hours to give a treated egg yolk product. Scrambled eggs were then prepared by adding 20 ml of milk to the treated egg yolk product, melting 20 g of butter in a pan, and cooking the mixture over a low heat. A sample to which no enzyme was added was used as a control.

The cooked scrambled egg was freeze-dried and a lipid fraction was extracted and fractionated from the dried sample with a solvent (chloroform : methanol : acetic acid = 2:1:0.1). The relative 4-ONO concentration in the sample was determined by the method previously described. The results are shown in Table 7.

Table 7

| Treated Group | Relative 4-ONO concentration (mol%) |
|---|---|
| 1 (Control) | 0.0 |
| 2 | 29.4 |
| 3 | 81.2 |
| 4 | 98.5 |
| Comparison Group (PL-C) | 51.1 |
| | 62.8 |

The figures presented in Table 7 clearly indicate that the cholesterol content of scrambled egg is substantially reduced by pretreatment of the eggs with the combination of CHOD and PL-D, and that those results are better than that using the combination of CHOD plus PL-C.

6

Example 5

A 20% aqueous solution of egg yolks was centrifuged at 10000 x g for 15 minutes to obtain a supernatant liquid. The supernatant liquid (50 ml) was then passed through a column packed with the polymer immobilized PL-D described in Reference Example 3 or the corresponding control polymer (bed volume: 20 ml) at a temperature of 50°C at a flow rate of 0.5 ml/min. 240 activity units of cholesterol oxidase were then added to 30 ml of the eluate and the mixture was treated at 37°C for 3 hours to give a cholesterol-reduced egg yolk product. The treated egg yolk product was freeze-dried and a lipid fraction was extracted from the obtained sample with ethyl acetate and fractionated. The relative concentration of 4-ONO in the obtained sample was determined by the method as previously described. The results are shown in Table 8.

Table 8

| Treated Group | Relative 4-ONO Concentration (mol%) |
|---|---|
| Control group | 11.3 |
| PL-D-treated group | 86.6 |

The results clearly indicate that an egg yolk product is obtained having a substantially reduced cholesterol content.

Example 6

Phospholipase D having the activity units shown in Table 9 was added to 1 kg of 20% egg yolk solution. A sample to which no enzyme was added was used as a control.

Table 9

| Treated Group | Amount of PL-D Added (unit/g Egg Yolk) |
|---|---|
| 1 (Control) | 0 |
| 2 | 0.2 |

The mixture was incubated at 50°C for 20 hours and then dried with MINISPRAY DRYER (manufactured by Yamato Science Co.). 10 g of the dried egg yolk was extracted with supercritical carbon dioxide at 163 atm/40°C using supercritical fluid extraction apparatus (SUPER-200 by Nihon Bunko Co.). Flow was continued until 45 g carbon dioxide for each gram of the sample had been passed through the sample. The total lipid was extracted from the control egg yolk and the $CO_2$ extracted egg yolk with a mixture of chloroform and methanol (2:1). Then cholesterol and triglyceride in the total lipid were measured by TLC/FID IATROSCAN.

The cholesterol and triglyceride content of the extracted product were then expressed as a percentage of the cholesterol and triglyceride in a sample untreated by extraction with supercritical carbon dioxide. The results are shown in Table 10.

Table 10

| Treated Group | Cholesterol Content of Product (mol%) | Triglyceride Content of Product (Mol%) |
|---|---|---|
| 1 (Control) | 91 | 91 |
| 2 | 67 | 93 |

The figures clearly show a substantial improvement in reducing the cholesterol content of the egg yolks resulting from the pretreatment with PL-D prior to the supercritical $CO_2$ extraction.

7

Example 7

Phospholipase D having the activity units shown in Table 11 was added to 50 g of 15% egg yolk solution. A sample to which no enzyme was added was used as a control.

Table 11

| Treated Group | Amount of PL-D Added (unit/g Egg Yolk) |
|---|---|
| 1 (Control) | 0 |
| 2 | 2 |

The mixture was incubated at 50°C for 20 hours to give the enzyme-treated egg yolk. The treated egg yolk was stirred with 1.5 g of β-cyclodextrin for 5 minutes at 20°C, and then centrifuged at 8000 x g for 20 minutes. A control sample to which no β-cyclodextrin was added was treated in the same way. Total lipids were then extracted from both the β-cyclodextrin-treated sample and the β-cyclodextrin-untreated sample by extraction with a mixture of chloroform and methanol (2:1). Cholesterol and triglyceride in the total lipid extract were then measured by TLC/FID IATROSCAN.

The cholesterol and triglyceride concentrations in the treated samples are then expressed as a percentage of that in the β-cyclodextrin-untreated samples. The results are presented in Table 12.

Table 12

| Treated Group | Product Cholesterol concentration (mol%) | Product Triglyceride Concentration (mol%) |
|---|---|---|
| 1 (Control) | 5 | 36 |
| 2 | 0 | 102 |

The figures clearly indicate a substantially reduced cholesterol content in the egg yolk product which is treated with PL-D prior to the β-cyclodextrin extraction.

Example 8

Phospholipase D having the activity units shown in Table 13 was added to 500 ml of 20% egg yolk solution. A sample to which no enzyme was added was used as a control group.

Table 13

| Treated Group | Amount of PL-D Added (unit/g Egg Yolk) |
|---|---|
| 1 (Control) | 0 |
| 2 | 0.2 |
| 3 | 1 |

The mixture was incubated at 50°C for 20 hours to give an enzyme-treated egg yolk product. The treated egg yolk product was stirred with 20 g of β-cyclodextrin for 5 minutes at 20°C and the mixture then centrifuged at 8000 x g for 30 minutes. A control sample to which no β-cyclodextrin was added was treated in the same way. The egg yolk solution obtained as the supernatant was then freeze-dried. The weight of dried samples was measured. The results are shown in Table 14, where the weight of the dried samples treated with β-cyclodextrin is expressed as a percentage of the weight of the dried β-cyclodextrin-untreated sample.

8

Table 14

| Treated Group | Dried Weight (%) |
|---|---|
| 1 (Control) | 59 |
| 2 | 95 |
| 3 | 98 |

Total cholesterol was then extracted from both the $\beta$-cyclodextrin-untreated egg yolk and the $\beta$-cyclodextrin-treated egg yolk using a mixture of chloroform and methanol (2:1), and the cholesterol was measured by TLC/FID IATROSCAN.

The residual cholesterol content of the treated egg yolk product is expressed as a percentage of that in the $\beta$-cyclodextrin-untreated product. The results are given in Table 15 and clearly indicate the improvement in cholesterol reduction obtained by pretreating the yolks with PL-D prior to the $\beta$-cyclodextrin extraction.

Table 15

| Treated Group | Product Cholesterol Concentration (mol%) |
|---|---|
| 1 (Control) | 7.7 |
| 2 | 1.4 |
| 3 | 0.7 |

Reference Example 1

Epoxy-activated Sepharose (manufactured by Pharmacia) was added to 50% dimethylformamide aqueous solution (pH 12.5) of 6.4 mM digitonin. The mixture was reacted for 48 hours at 45°C, and pH 12.5. After completion of the reaction, the prepared polymer was washed with 0.1 M borate buffer (pH 8.0) and then with 0.1 M acetate buffer (pH 4.0). The polymer was then allowed to stand overnight in 1.0 M ethanolamine aqueous solution and further washed with water to give a polymer-immobilized digitonin.

Reference Example 2

Cholesterol oxidase-producing bacterium (Brevibacterium sterolicum ATCC 21387) was inoculated into 10 ml of bouillon medium, and cultured with shaking at 30°C to prepare a seed culture.

10 ml of the seed culture was inoculated into 1 l of a culture medium (3% corn steep liquor, 2% polypeptone, 0.2% sodium nitrate, 0.1% monopotassium phosphate, 0.05% potassium chloride, 0.05% magnesium sulphate, pH 7.3) and cultured with shaking at 30°C for 24 hours. After completion of the culturing, the culture was centrifuged at 10000 x g for 20 minutes to extract the cultured cells.

Reference Example 3

10 g of freeze-dried CNBr-activated Sepharose (manufactured by Pharmacia) was swollen and washed with 2 l of 1 mM hydrochloric acid aqueous solution. The polymer was then added to a solution containing 700 mg of phospholipase D (manufactured by Sigma Inc.) in a 0.1 M NaHCO$_3$ buffer (pH 8) containing 0.5 M NaCl. The mixture was then held at 4°C for 24 hours. After completion of the reaction, excess protein was washed off, and the polymer residue treated with ethanolamine solution. Finally, the polymer was washed three times with the buffer described above and with 0.1 M acetate buffer (pH 4) containing 0.5 M NaCl to provide a polymer-immobilized phospholipase D. A control polymer was prepared in the same way, but without the phospholipase D.

9

**Claims**

1. A method of reducing the cholesterol content of a foodstuff consisting of or containing eggs, and which comprises treating the foodstuff with a phospholipase thereby to effect enzymatic hydrolysis of phospholipids contained in the foodstuff, and subjecting the foodstuff subsequently or simultaneously to a cholesterol-reducing treatment, characterised in that the enzyme used to effect that enzymatic hydrolysis is phospholipase D.

2. A method according to claim 1, characterised in that the cholesterol-reducing treatment is also carried out enzymatically.

3. A method according to claim 2, characterised in that the cholesterol-reducing treatment is carried out using cholesterol oxidase or a cholesterol oxidase producing microorganism.

4. A method according to claim 2 or 3, characterised in that foodstuff is treated simultaneously with the two enzymes.

5. A method according to claim 1, wherein the cholesterol-reducing treatment comprises a chemical and/or physical treatment effective to reduce the cholesterol content of the foodstuff.

6. A method according to claim 5, wherein the cholesterol-reducing treatment comprises solvent extraction of the cholesterol from the foodstuff, supercritical extraction with $CO_2$, or adsorption onto $\beta$-cyclodextrin, activated carbon or immobilised digitonin.

7. A method according to any one of claims 1 to 6, characterised in that the enzymatic hydrolysis is carried out using phospholipase D in an amount providing from $1 \times 10^{-1}$ to $1 \times 10^5$ units of activity per gram of phospholipid in the foodstuff.

**Patentansprüche**

1. Verfahren zur Verringerung des Cholesteringehalts in einem Nahrungsmittel, das aus Eiern besteht oder Eier enthält, umfassend Behandeln des Nahrungsmittels mit einer Phospholipase, um dadurch eine enzymatische Hydrolyse der im Nahrungsmittel enthaltenen Phospholipide zu bewirken, und nachfolgendes oder gleichzeitiges cholesterin-verringerndes Behandeln des Nahrungsmittel, dadurch gekennzeichnet, daß das Enzym, welches verwendet wird, um die enzymatische Hydrolyse zu bewirken, Phospholipase D ist.

2. Verfahren nach Anspruch 1, dadurch gekennzeichnet, daß das cholesterin-verringernde Behandeln ebenfalls enzymatisch durchgeführt wird.

3. Verfahren nach Anspruch 2, dadurch gekennzeichnet, daß das cholesterin-verringernde Behandeln unter Verwendung von Cholesterinoxidase oder einem cholesterinoxidase-herstellenden Mikroorganismus durchgeführt wird.

4. Verfahren nach Anspruch 2 oder 3, dadurch gekennzeichnet, daß das Nahrungsmittel gleichzeitig mit den beiden Enzymen behandelt wird.

5. Verfahren nach Anspruch 1, wobei das cholesterin-verringernde Behandeln ein chemisches und/oder physikalisches Behandeln umfaßt, um den Cholesteringehalt des Nahrungsmittels zu verringern.

6. Verfahren nach Anspruch 5, wobei das cholesterin-verringernde Behandeln eine Lösemittelextraktion des Cholesterins aus dem Nahrungsmittel, eine überkritische Extraktion mit $CO_2$ oder eine Adsorption an ß-Cyclodextrin, Aktivkohle oder immobilisiertem Digitonin umfaßt.

7. Verfahren nach einem der Ansprüche 1 bis 6, dadurch gekennzeichnet, daß die enzymatische Hydrolyse unter Verwendung von Phospholipase D, welche in einer Menge von $1 \cdot 10^{-1}$ bis $1 \cdot 10^5$ Aktivitätseinheiten je Gramm Phospholipid im Nahrungsmittel bereitsteht, durchgeführt wird.

**Revendications**

1. Procédé permettant d'abaisser la teneur en cholestérol d'un produit alimentaire à base d'oeufs, qui comporte le fait de traiter le produit alimentaire avec une phospholipase, pour effectuer ainsi l'hydrolyse enzymatique des phospholipides contenus dans le produit alimentaire, et le fait de soumettre ce produit alimentaire, ensuite ou simultanément, à un traitement qui en abaisse la teneur en cholestérol, **caractérisé** en ce que l'enzyme utilisée pour effectuer l'hydrolyse enzymatique est de la phospholipase D.

2. Procédé conforme à la revendication 1, **caractérisé** en ce que le traitement abaissant la teneur en cholestérol est lui aussi réalisé par voie enzymatique.

3. Procédé conforme à la revendication 2, **caractérisé** en ce que le traitement abaissant la teneur en cholestérol est réalisé à l'aide d'une cholestérol oxydase ou d'un micro-organisme produisant une cholestérol oxydase.

4. Procédé conforme à la revendication 2 ou 3, **caractérisé** en ce que le produit alimentaire est traité simultanément par les deux enzymes.

5. Procédé conforme à la revendication 1, dans lequel le traitement d'abaissement de la teneur en cholestérol comporte un traitement chimique et/ou physique qui permet effectivement de réduire la teneur en cholestérol du produit alimentaire.

6. Procédé conforme à la revendication 5, dans lequel le traitement d'abaissement de la teneur en cholestérol comporte une extraction du cholestérol du produit alimentaire par un solvant, une extraction par du $CO_2$ à l'état supercritique, ou une adsorption sur de la $\beta$-cyclodextrine, du charbon actif ou de la digitonine immobilisée.

7. Procédé conforme à l'une quelconque des revendications 1 à 6, **caractérisé** en ce que l'on effectue l'hydrolyse enzymatique en utilisant de la phospholipase D en une quantité fournissant de $1.10^{-1}$ à $1.10^5$ unités d'activité enzymatique par gramme de phospholipides présents dans le produit alimentaire.